# EUROPEAN PATENT APPLICATION

(11) **EP 4 201 274 A1**
(43) Date of publication of application: **28.06.2023**
(21) Application number: 21217664.8
(22) Date of filing: 23.12.2021
(51) Int. Cl.: A47J 31/58, F16K 17/04

(54) **COFFEE MACHINE WITH A PRESSURE RELIEF VALVE**

(71) Applicant: BSH Hausgeräte GmbH, 81739 München (DE)
(72) Inventor: Jabs, Dennis, 83278 Traunstein (DE); Monnheimer, Maximilian, 69483 Wald-Michelbach (DE); Hacker, Robert, 83342 Tacherting (DE); Gerl, Ulrike, 83278 Traunstein (DE)

(57) **Abstract**

A coffee machine (10) with a fluid system (12) having a pressure relief valve (11) comprising a housing (13), a cap (14), a spring (20) and a seal (16) placed in a seal seating (17) of a seal retainer (15), wherein the seal retainer (15) has at least one gap (18) for pressure redirection. The present invention enables a coffee machine with a pressure relief valve of reliable operation, extended lifetime and robustness.

## Description

The present invention relates to a coffee machine with a fluid system having a pressure relief valve comprising a housing, a cap, a spring and a seal placed in a seal seating of a seal retainer.

Coffee machines are well known from the state of the art. Pressure limiting valves are widely used in different types of devices including coffee machines. The purpose of using the safety valves is to protect coffee machines from damages arising from e.g. overpressure. Automatic coffee machines are provided with a various types of valves for regulating, directing and controlling the flow of media like air or water through the coffee machine systems. Valves are necessary for automation of processes inside the coffee machine which are required for the brewing process. In the pressure relief valve, an elastic sealing component is compressed in a defined manner in the closed state of the valve by the defined force. If the fluid pressure exceeds the previously set force, the valve opens and the pressure inside the system is decreased.

The patent document EP 2 067 423 B1 discloses a machine which has a fresh water tank, a heater e.g. low-mass geyser, and a brewing chamber connected with each other by line sections. A pressure-dependent automatically switching pressure control valve is provided in the line sections between the water tank and heater, and a bidirectional valve is provided in the line sections before the chamber. The valves are operable in pressure-independent manner and coupled with the chamber such that the valve is opened for a passage in an over-pressure direction when the chamber is opened.

The patent application US 2005 / 263 187 A1 discloses a check valve capable of fitting within a conduit, a front end of the check valve being inserted first, the check valve comprising a barbed casing having an interior cavity; internal components provided substantially within the interior cavity of the barbed casing, the internal components capable of moving between a first position where fluid flow is allowed through the barbed casing and a second position where fluid flow is prevented through the barbed casing, fluid flow in one direction biasing and maintaining the internal components in the first position and fluid flow in the opposite direction biasing the internal components into the second position; and barbs provided on an outer surface of the barbed casing, the barbs capable of maintaining the check valve in a fixed location at which the check valve is positioned in the conduit.

The patent application EP 1 798 457 A1 discloses a priming valve device for beverage machine comprising: a casing assembly including a water inlet, a water outlet and a drain and venting portion for discharging water and/or air during priming, a valve assembly associated with the casing assembly which comprises a valve member; wherein the same valve member is moveable to a closed position of the water outlet, by elastic return, when the pressure in the inlet decreases under the elastic return pressure of the valve member.

It is the object of the present invention to provide a coffee machine with a pressure relief valve in which the risk of jamming of the seal between the seal retainer and the housing when the pressure exceeds the defined value is eliminated.

Another object of the present invention is to provide a pressure relief valve of a prolonged time of use.

These objects are solved by a coffee machine with a fluid system having a pressure relief valve whereby the seal retainer has at least one gap for pressure redirection.

The fluid system of the coffee machine is essential for performing the brewing process. The coffee machine fluid system comprises components which are necessary to perform a brewing process. The fluid system comprises main units like heater, water tank, pump or brewing unit and also additional elements like micro switches and valves which cooperates with each other in order to perform brewing processes.

The pressure relief valve is provided in order to protect the device from damages caused by the excessive pressure. The heating and pumping processes which are necessary for the brewing generate a pressure which has to be controlled and reduce if necessary. For the pressure reduction the pressure relief valve is provided. For the safety reasons the tolerances of valve components has to be made with utmost care.

The pressure relief valve has a housing, a cap, a spring and a seal which is placed in a seal seating of a seat retainer. The seal retainer is the main element of the valve. The seal retainer is placed in the area formed by the connection of the housing and the cap. The spring, the seal retainer with the seal are placed inside a housing and closed by the cap.

The seal is placed in a seal seating. The seal seating is a groove of annular shape. The seal is an elastic element of ring shape.

During the brewing process when the pressure inside the fluid system is on a safe, defined value the pressure relief valve is closed. When the pressure value exceeds the safe value a strong flow around the seal occurs and the pressure relief valve opens and let the excessive steam to flow out of the fluid system. At the beginning the seal expands and is forced out of the seal seating. The seal is partially pinched between the seal retainer and the housing and the seal can stuck between those parts. In such state the function of the valve is disrupted and the device is not protected against overpressure. To avoid the seal jamming the seal retainer is provided with at least one gap for pressure redirection. The gap is placed on a side wall of the seal seating.

The seal seating is a groove of annular shape which is surrounded by the side wall. The side wall is a protrusion of annular shape. The side wall is provided with at least one gap. Preferably there is more than one gap. The gap is a simple interruption of the seal seating side wall. The gap can be designed also as an opening of different shape and size.

The positive effect of providing the gap is that the pressure does not force the seal outside the seal seating and the seal jamming is prevented.

In another embodiment of the invention the seal is an O-ring. The seal is a standard element of the valve. Thanks to the O-ring the pressure flow is improved and its round shape is positive for the preventing the seal from jamming between elements of the valve.

In another embodiment of the invention the seal is fitted into the seal seating. The shape of the seal seating fits the shape of the seal. If the seal is an O-ring the seal seating is a groove of an annular shape with rounded walls. The positive effect is that seal sliding in the seal seating is smooth.

In a preferred embodiment of the invention the seal retainer has at least one outflow channel. In another embodiment of the invention the seal retainer has two parallel outflow channels or two outflow channels which converge and merge into one channel. The seal retainer is an element for receiving the seal and for pressure redirection. The outflow channels are provided instead the gap or as additional path for pressure outflow. The positive effect is that the process of the pressure flow can be controlled. The seal retainer can be provided with multiple outflow channels of different shapes and dimensions depending on the device. The inlets of the outflow channels is placed in the seal seating in the area of overpressure.

The present invention enables a coffee machine with a pressure relief valve of reliable operation, extended lifetime and robustness.

The construction of the invention, however, together with additional objects and corresponding advantages will be best understood from the following description of specific embodiments and in connection with the accompanying drawing.

In the drawing:
- Fig. 1: shows a coffee machine in isometric view
- Fig. 2: shows a schematic view of a fluid system of a coffee machine with a pressure relief valve
- Fig. 3: shows components of the pressure relief valve in a disassembled state
- Fig. 4: shows the pressure relief valve cross section
- Fig. 5: shows a seal retainer in isometric view
- Fig. 6: shows a part of the seal retainer with arrows showing the pressure flow
- Fig. 7: shows a cross section of the seal retainer
- Fig. 8: shows a cross section of the seal retainer

In cooperation with attached drawing, the technical contents and detailed description of the present invention are described thereinafter according to a preferable embodiment being not used to limit its executing scope. Any equivalent variation and modification made according to appended claims is all covered by the claims claimed by the present invention.

In the following description of the preferred embodiments of the present invention, similar identical reference numbers designate identical of comparable components.

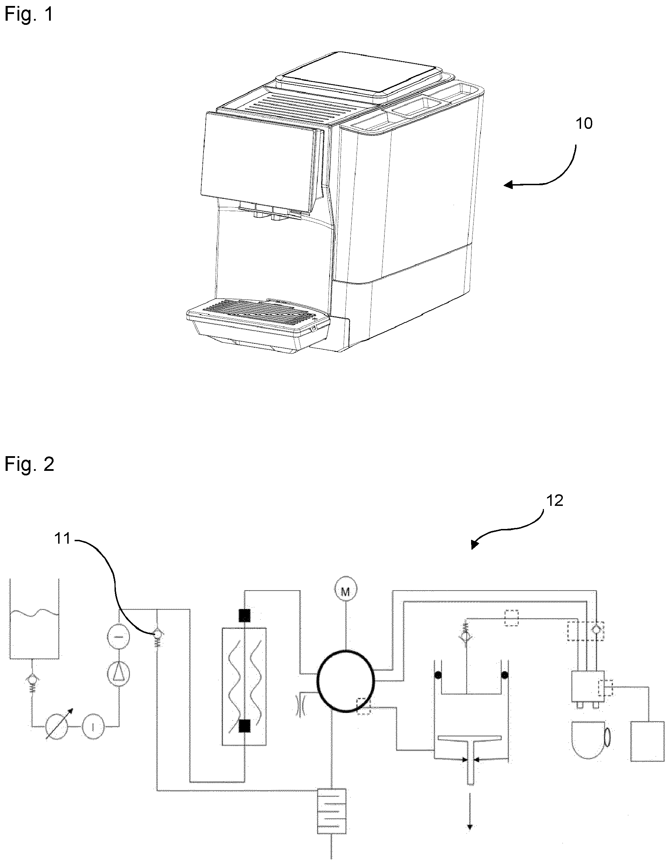

Fig. 1 shows a coffee machine 10 in isometric view. The coffee machine 10 is a standard device having a standard modules like a water tank, a coffee outlet, a coffee beans tank etc.

Fig 2 shows a schematic view of a fluid system 12 of a coffee machine 10 with a pressure relief valve 11. The fluid system 12 comprises a water tank, a variety of valves and sensors, a flowmeter, water pump, a brewing chamber, a drip pan and multiple of connectors between the elements. All elements are shown schematically in the fig. 2.

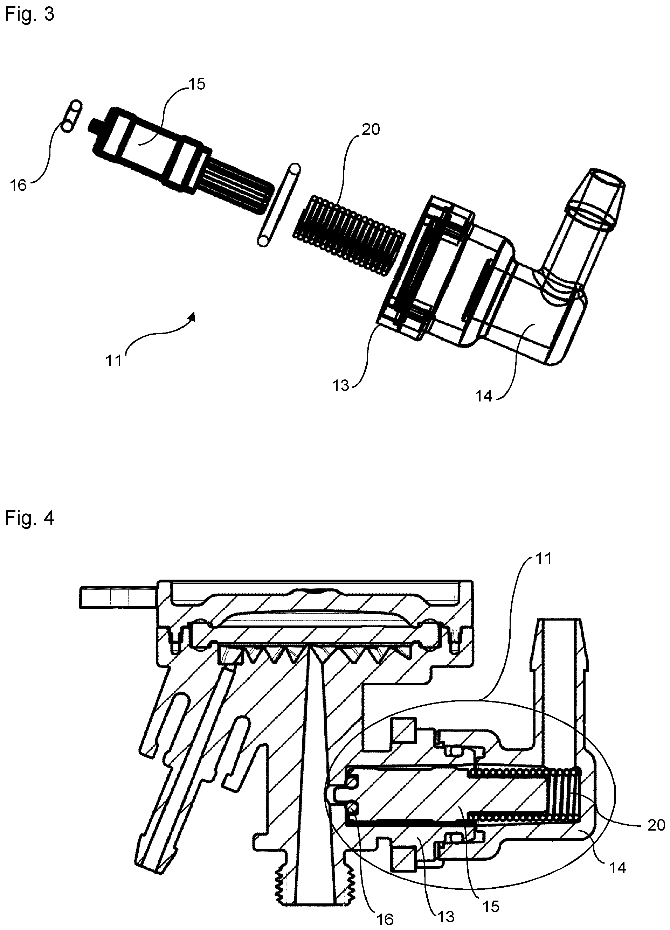

Fig 3 shows components of the pressure relief valve 11 in a disassembled state. The pressure relief valve 11 consist of the housing 13 and the cap 14 assembled with each other. The seal retainer 15 with the seal 16 and the spring 20 are placed inside the area formed by connection of the housing 13 and the cap 14. The seal retainer 15 is the main element of the pressure relief valve 11. The spring 20, the seal retainer 15 and the seal 16 are placed inside a housing 13 and closed by the cap 14.

Fig. 4 shows the pressure relief valve 11 cross section. The pressure relief valve 11 is shown in assembled state as a part of a pulsation damper which is provided to reduce vibrations and noises of the coffee machine 10.

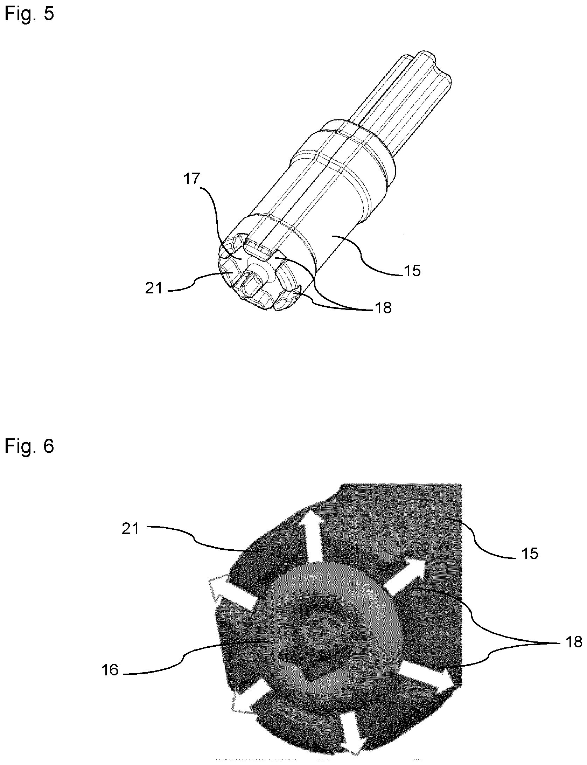

Fig. 5 shows a seal retainer 15 in isometric view. The seal retainer 15 is an element of a cylindrical shape. The seal retainer 15 has a seal seating 17 which is a round shape groove for receiving the seal (not shown on the figure). The seal seating 17 is formed by its side wall 21 which is provided with a several gaps 18 for pressure redirection.

Fig. 6 shows a part of the seal retainer 15 with arrows showing the pressure flow through the gaps 18. During the brewing process the strong pressure occurs around the seal 16. To avoid the seal 16 expansion the pressure is redirected by the gaps 18 outside the seal retainer 15 and the jamming of the seal 16 is prevented.

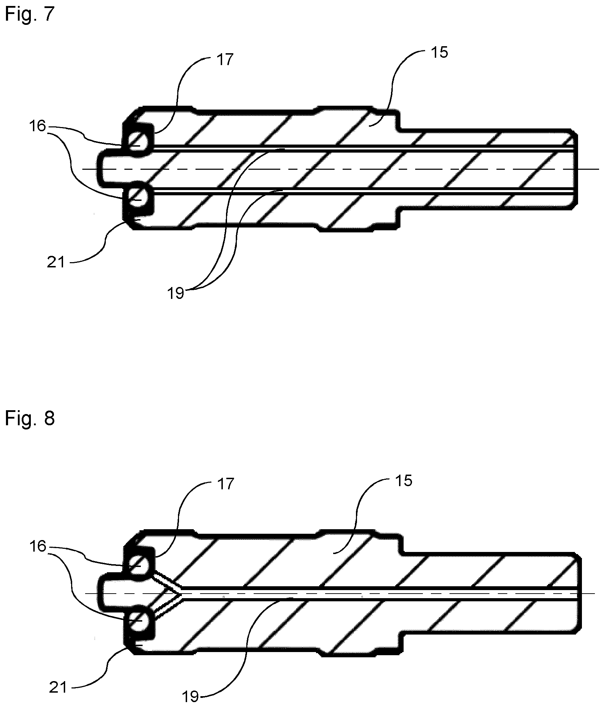

Fig. 7 shows a cross section of the seal retainer 15 with the seal 16 and two outflow channels 19. The seal retainer 15 has two parallel outflow channels 19 which helps to discharge the overpressure generated during the brewing process.

Fig. 8 shows a cross section of the seal retainer 15 with the seal 16 and the outflow channels 19. The inlets of the outflow channels 19 are provided in the seal seating 17.

The outflow channels 19 converge and merge into one channel which outlet is placed at the opposite end of the seal retainer 15.

The present invention enables a coffee machine with a pressure relief valve of reliable operation, extended lifetime and robustness.

### REFERENCE SIGNS

- 10: coffee machine
- 11: pressure relief valve
- 12: fluid system
- 13: housing
- 14: cap
- 15: seal retainer
- 16: seal
- 17: seal seating
- 18: gap
- 19: outflow channel
- 20: spring
- 21: side wall

## Claims

1. A coffee machine (10) with a fluid system (12) having a pressure relief valve (11) comprising a housing (13), a cap (14), a spring (20) and a seal (16) placed in a seal seating (17) of a seal retainer (15) **characterized in that** the seal retainer (15) has at least one gap (18) for pressure redirection.

2. The coffee machine (10) according to claim 1, **characterized in that** the gap (18) is placed on a side wall (21) of the seal seating (17).

3. The coffee machine (10) according to any of the preceding claims, **characterized in that** the seal (16) is an O-ring.

4. The coffee machine (10) according to any of the preceding claims, **characterized in that** the seal (16) is fitted into the seal seating (17).

5. The coffee machine (10) according to any of the preceding claims, **characterized in that** the seal retainer (15) has at least one outflow channel (19).

6. The coffee machine (10) according to any of the preceding claims, **characterized in that** the seal retainer (15) has two parallel outflow channels (19).

7. The coffee machine (10) according to any of the preceding claims 1 to 5, **characterized in that** the seal retainer (15) has two outflow channels (19) which converge and merge into one channel.
